# EUROPÄISCHE PATENTANMELDUNG

(11) **EP 1 921 426 A1**
(43) Veröffentlichungstag der Anmeldung: **14.05.2008**
(21) Anmeldenummer: 06123909.1
(22) Anmeldetag: 13.11.2006
(51) Int. Cl.: G01F 15/07, G01F 15/06, G01F 15/14

(54) **Betrugssicherer Zähler für einen Strömungsmesser**

(71) Anmelder: GWF Gas- & Wassermesserfabrik AG, CH-6002 Luzern (CH)
(72) Erfinder: Mathis, Peter, 6362, Stansstad (CH); Mettler, Roland, 6010, Kriens (CH)
(74) Vertreter: Gaussmann, Andreas

(57) **Zusammenfassung**

Bei diesem Zähler für ein strömendes Medium ist ein Sensor zum Erfassen einer äusseren Krafteinwirkung bzw. zum Erfassen der Durchbiegung einer Schutzhaube (1) vorgesehen. Der Sensor besteht aus einem Lichtsender (14), einem Lichtempfänger (13), einem Reflektor (11) und einem Biegungstaster (12). Bei einer Durchbiegung der Schutzhaube (1) wird der Biegungstaster (12) vor den Reflektor (11) geschoben. Lichtsender (14), Lichtempfänger (13) und Reflektor (11) bilden eine Reflektorlichtschranke, wobei bei einer Durchbiegung der Schutzhaube (1) der Lichtstrahl des Lichtsenders (14) mittels des Biegungstasters (12) unterbrochen wird. Der dabei sich verändernde Schaltzustand des Lichtempfängers (13) kann elektronisch erfasst und an das Lieferwerk des Mediums übermittelt werden.

## Beschreibung

Die Erfindung betrifft einen Zähler für ein strömendes Medium mit einem Zählwerk und einem Messwerk, wobei das das Zählwerk antreibende Messwerk vom strömenden Medium in Bewegung versetzbar ist gemäss der Definition des unabhängigen Patentanspruchs.

Zur Messung von strömendem Medium vorgesehene, mechanische Zähler mit einem mechanischen Zählwerk zur Anzeige des verbrauchten Volumens sind aus vielen Veröffentlichungen, aus Normen, beispielsweise EN 1359 und aus der Praxis bekannt. In den bekannten Zählern zur Messung von beispielsweise Wasser oder Gas wird mittels eines Messwerkes eine zum gemessenen Volumen proportionale Drehbewegung erzeugt, die mittels eines Getriebes auf ein Zählwerk mit Zahlenrollen und Schaltritzeln übertragen wird, wobei die Zahlenrollen das gemessene Volumen anzeigen.

Üblicherweise sind die Zahlenrollen durch Öffnungen eines Schildes einsehbar. Das übrige Zählwerk ist von aussen nicht sichtbar. Zum Schutz des mechanischen Zählwerkes ist vor dem Schild eine geschlossene, ganz oder teilweise transparente Schutzhaube angeordnet.

Mechanische Zählwerke, die elektronisch auslesbar sind, umfassen zusätzlich eine Leiterplatte mit der zum elektronischen Auslesen des Zählwerkstandes erforderlichen Elektronik und einen auf der Leiterplatte angeordneten Mikroprozessor, der den ausgelesenen Zählwerkstand in der Form eines vordefinierten Protokolls an das Lieferwerk des strömenden Mediums weiterleitet. Bei Versorgungsnetzwerken mit vorwiegend elektronisch auslesbaren Zählern verwaltet beispielsweise ein Netzbetreiber oder eine Netzagentur oder eine Verrechnungsgesellschaft die Daten aller Zähler und verteilt die Verbraucherdaten und die Verbrauchsdaten an die Lieferanten. Die Verbraucher haben so die Möglichkeit, den Lieferanten zu wählen und/oder nach Wunsch den Lieferanten zu wechseln. Im weiteren Beschreibungsverlauf sind im Term "Lieferwerk des strömenden Mediums" auch Netzbetreiber oder Netzagenturen oder Verrechnungsgesellschaften miteingeschlossen.

Eine von aussen auf die Schutzhaube einwirkende, beispielsweise mittels Gegenständen oder Vorrichtungen erzeugte Kraft kann die Schutzhaube durchbiegen und so eine Kraft auf das Schild ausüben und das Schild ebenfalls durchbiegen, wobei das Schild auf die Zahlenrollen einwirkt und diese bremst oder blockiert. Das gemessene Volumen des durchströmenden Mediums entspricht dann nicht mehr dem tatsächlich durch den Zähler geströmten Mediums. Das verfälschte Messergebnis bzw. das zu wenig gemessene Medium kann die Sicherheit der Mediumsverteilung beeinträchtigen.

Durch die einwirkende Kraft wird beispielsweise eine irreversible mechanische Veränderung der Schutzhaube hervorgerufen, die aber lediglich durch visuelle Zählerablesung erkennbar ist.

Hier will die Erfindung Abhilfe schaffen. Die Erfindung, wie sie in Anspruch 1 gekennzeichnet ist, löst die Aufgabe, eine Einrichtung schaffen, mittels der äussere Krafteinwirkungen auf das Zählwerk eines Zählers für ein strömendes Medium automatisch erkennbar bzw. erfassbar sind.

Vorteilhafte Weiterbildungen der Erfindung sind in den abhängigen Patentansprüchen angegeben.

Die durch die Erfindung erreichten Vorteile sind im wesentlichen darin zu sehen, dass bei automatisch auslesbaren Zählern mit einfachen und kostengünstigen Mitteln eine uneingeschränkte Überwachung von Verfälschung des Zählwerkstandes machbar ist. Die elektronisch erfasste Beeinträchtigung des Messergebnisses kann dann bei der elektronischen Auslesung des Zählwerkstandes oder als separate Meldung an das Lieferwerk des strömenden Mediums übertragen werden. Mit der automatisierten Überwachung des mechanischen Zählerzustandes kann gegenüber der visuellen Kontrolle des Zählers Personal und Kosten gespart werden. Ausserdem kann eine Beeinträchtiung des Messergebnisses rasch erkannt werden und daraufhin Sofortmassnahmen ergriffen werden. Zudem können länger dauernde Beeinträchtigungen von kurzzeitgen Beeinträchtigungen unterschieden und dadurch Fehlalarme vermieden werden.

Ein mechanisches Zählwerk, welches sich zur elektronischen Auslesung eignet, ist beispielsweise aus EP 0 660 263 B1 bekannt.

Mindestens ein Sensoren erfasst die äussere Krafteinwirkung, wobei der Sensor mit der Schaltung zur elektronischen Auslesung des Zählwerkstandes verbunden ist.

Die Schutzhaube dient zum Schutz des Zählwerkes vor Staub, Feuchtigkeit, mechanischer Beschädigung und anderen äusseren Einflüssen. Der Sensor zur Überwachung äusserer Krafteinflüsse wird bevorzugt auch innerhalb der Schutzhaube angeordnet. Damit die Zahlenrollen von aussen ablesbar sind, muss die Schutzhaube mindestens teilweise oder ganz transparent sein. Deshalb wird der erfindungsgemässe Sensor möglichst unsichtbar angeordnet und bevorzugt zusammen mit dem nicht transparenten Schild realisiert.

Als Sensor kann ein elektromechanischer oder elektronischer Schalter, ein magnetischer Schalter, ein elektromagnetischer Schalter oder ein elektrooptischer Schalter verwendet werden. Solche Sensoren können reversibel oder nicht reversibel sein in dem Sinne, dass sie, wenn die Schutzhaube nicht mehr durchgebogen ist, wieder in ihre Ausgangslage zurückkehren oder nicht. Als Sensor sind auch an der Innenseite der Schutzhaube angeordnete Dehnmessstreifen denkbar, die bei einer Durchbiegung der Schutzhaube ihren Widerstandswert verändern, der elektronisch auswertbar ist. Als weitere Sensorvariante kann die Innenseite der Schutzhaube und die Oberseite des Schildes mit einer elektrisch leitenden Beschichtung versehen sein und als elektrischer Schalter dienen, der geschlossen wird, sobald die Schutzhaube das Schild berührt.

Im gezeigten Ausführungsbeispiel wird als Sensor ein elektrooptischer Schalter, bestehend aus einer Reflektorlichtschranke und einem biegbaren Element zur Beeinflussung der Lichtschrankeneigenschaften verwendet. Das biegbare Element wird durch die äussere Krafteinwirkung bewegt.

In einer ersten bevorzugten Ausführung umfasst der Sensor eine Reflektorlichtschranke und ein federndes Element, das bei einer Durchbiegung der Schutzhaube einen Reflektor abdeckt.

In einer zweiten bevorzugten Ausführung umfasst der Sensor eine Reflektorlichtschranke, bei der ein federnder Reflektor bei der Durchbiegung der Schutzhaube derart verschoben wird, dass er das Licht nicht mehr auf den Empfänger der Reflektorlichtschranke reflektiert. Die bevorzugten Ausführungen des elektrooptischen Sensors sind reversibel, so dass eine nur kurzzeitige Durchbiegung der Schutzhaube, beispielsweise durch einen Schlag, nicht als Beeinflussung erfasst wird.

Der Sensor zur Erfassung der in der Schutzhaube durch die äussere Kraft erzeugte Durchbiegung ist an den Mikroprozessor angeschlossen, der den Schaltzustand des Sensors bei der Auslesung des Zählwerkstandes erfasst und zusammen mit dem Zählwerkstand an das Lieferwerk des Mediums übermittelt.

Beim Zähler für ein strömendes Medium, beispielsweise Gas oder Wasser, mit einem Zählwerk und einem Messwerk wird das das Zählwerk antreibende Messwerk vom strömenden Medium in Bewegung versetzt, wobei ein Sensor zum Erfassen einer äusseren Krafteinwirkung auf das Zählwerk vorgesehen ist.

Anhand der beiliegenden Figuren wird die vorliegende Erfindung näher erläutert.

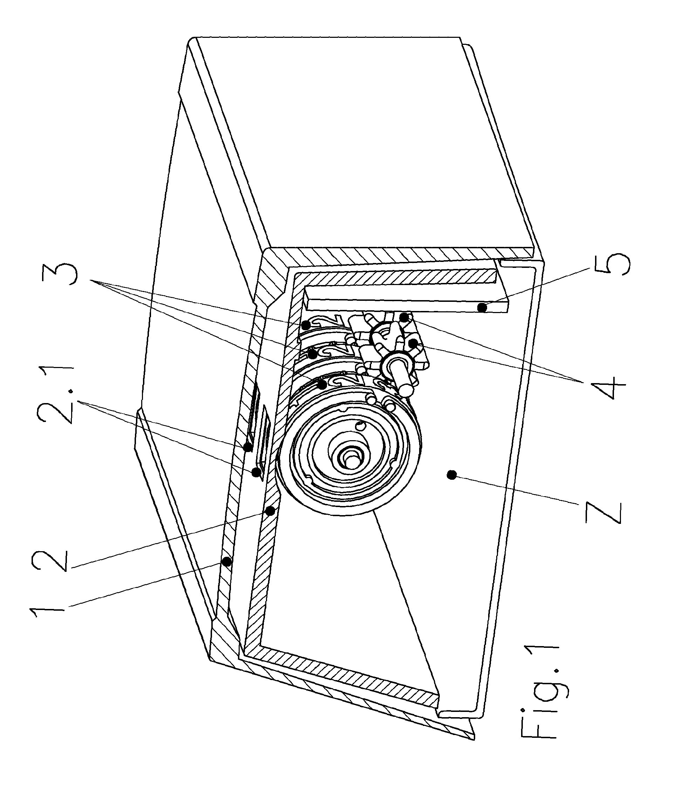

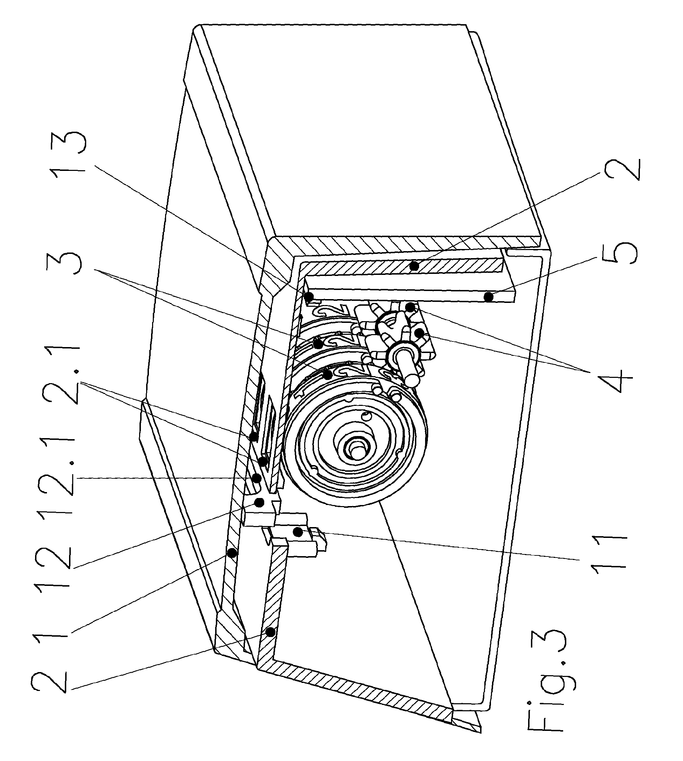

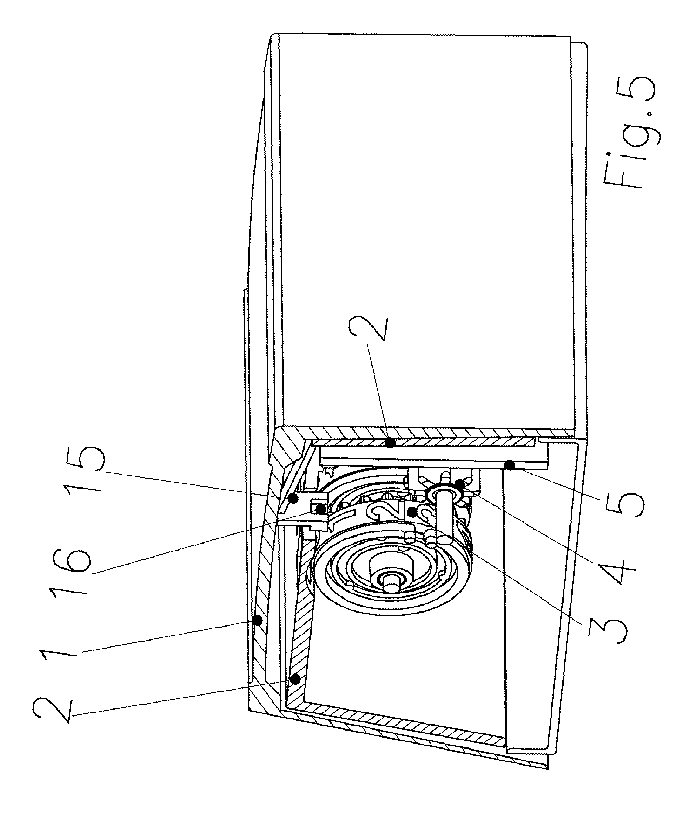

Es zeigen:
Fig. 1
   eine Schnittansicht eines Zählwerkes eines Zählers für ein strömendes Medium,
Fig. 2
   den Zähler gemäss Fig. 1 mit einer äusseren Krafteinwirkung,
Fig. 3, Fig. 3a
   den Zähler gemäss Fig. 1 mit einer ersten Ausführungsvariante eines Sensors zum Erfassen einer äusseren Krafteinwirkung,
Fig. 4
   den Sensor gemäss Fig. 3 in einer weiteren Ansicht,
Fig. 5
   den Zähler gemäss Fig. 1 mit einer zweiten Ausführungsvariante eines Sensors zum Erfassen einer äusseren Krafteinwirkung und
Fig. 6, Fig. 6a
   den Sensor gemäss Fig. 5 in einer weiteren Ansicht.

Fig. 1 zeigt ein Zählwerk Z eines Zählers für ein strömendes Medium, beispielsweise Gas oder Wasser. Nicht dargestellt ist das das Zählwerk Z antreibende Messwerk mit beispielsweise einer Kupplung und einem Getriebe. Das Messwerk ist mittels des strömenden Mediums in Bewegung versetzbar. Ein Messwerk mit Kupplung und Getriebe ist beispielsweise mit der EP 1 248 080 A1 offenbart worden.

Das Zählwerk Z wird mittels einer ganz oder teilweise transparenten Schutzhaube 1 vor äusseren Einflüssen geschützt. Ein Schild 2 deckt das Zählwerk Z ab, wobei am Schild 2 angeordnete Aussparungen 2.1 den Zählwerkstand einsehbar machen. Das Schild 2 kann auch eine Beschriftung mit Daten des Zählers tragen.

Das Zählwerk Z besteht im wesentlichen aus Zahlenrollen 3 und Schaltritzeln 4, wobei die niederwertigste Zahlenrolle mittels Messwerk antreibbar ist. Ein Zehntel der Umdrehungen einer jeden Zahlenrolle wird mittels eines Schaltritzels auf die benachbarte Zahlenrolle übertragen. Anstelle der Zahlenrollen 3 können auch mechanisch linear verschiebbare Register vorgesehen sein.

Zur elektronischen Auslesung des Zählwerkstandes ist eine Leiterplatte 5 vorgesehen mit der zum elektronischen Auslesen des Zählwerkstandes erforderlichen Elektronik und einem auf der Leiterplatte angeordneten Mikroprozessor, der den ausgelesenen Zählwerkstand in der Form eines vordefinierten Protokolls an das Lieferwerk des strömenden Mediums weiterleitet. Die zur elektronischen Auslesung des Zählwerkstandes notwendige Einrichtung ist beispielsweise mit der EP 0 660 263 B1 offenbart worden.

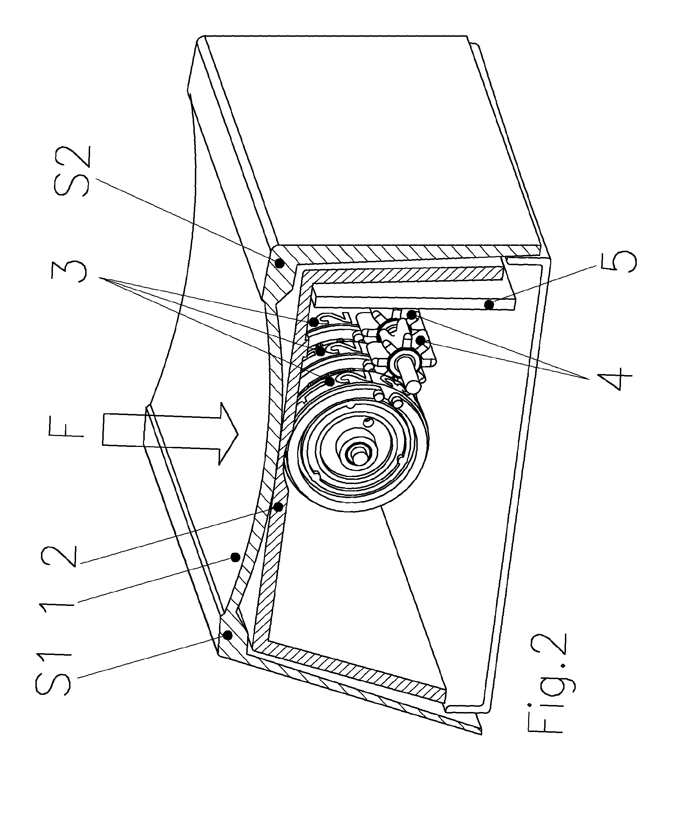

Fig. 2 zeigt den Zähler gemäss Fig. 1 mit einer äusseren Krafteinwirkung bzw. einer mit einem Pfeil symbolisierten von Aussen einwirkenden Kraft F. Die Kraft F erzeugt in der elastischen Schutzhaube 1 eine Durchbiegung, die auch im Schild 2 eine Durchbiegung erzeugt, wobei das Schild 2 die Zahlenrollen 3 berührt und diese bremst oder blockiert. Die Kanten S1 und S2 der Schutzhaube 1 können im wesentlichen als starr betrachtet werden. Der zur Erkennung bzw.

Erfassung der äusseren Krafteinwirkung auf die Schutzhaube 1 verwendete Sensor soll die Durchbiegung der Schutzhaube 1 für alle möglichen Ansatzpunkte der Kraft F zwischen den beiden starren Kanten S1 und S2 möglichst zuverlässig erfassen. Das die Durchbiegung erfassende Element des Sensors wird deshalb bevorzugt in der Mitte zwischen den Kanten S1 und S2 angeordnet.

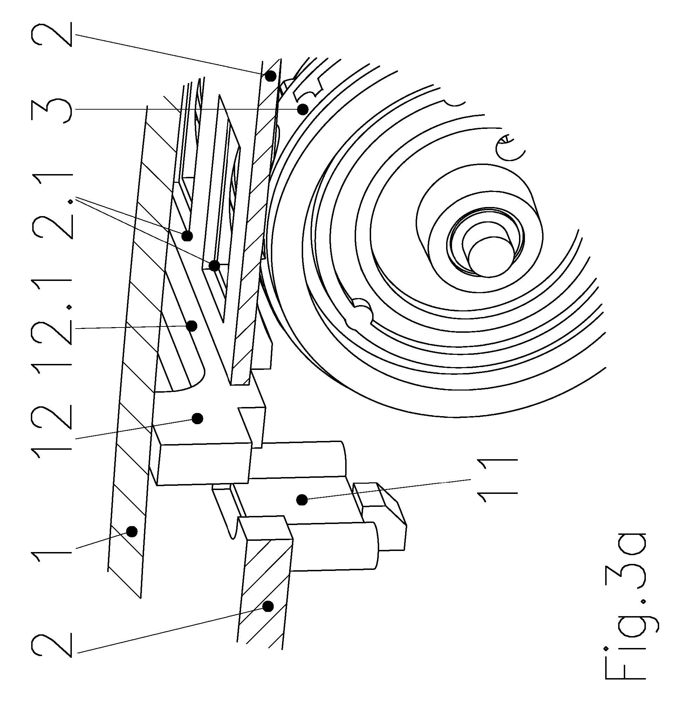

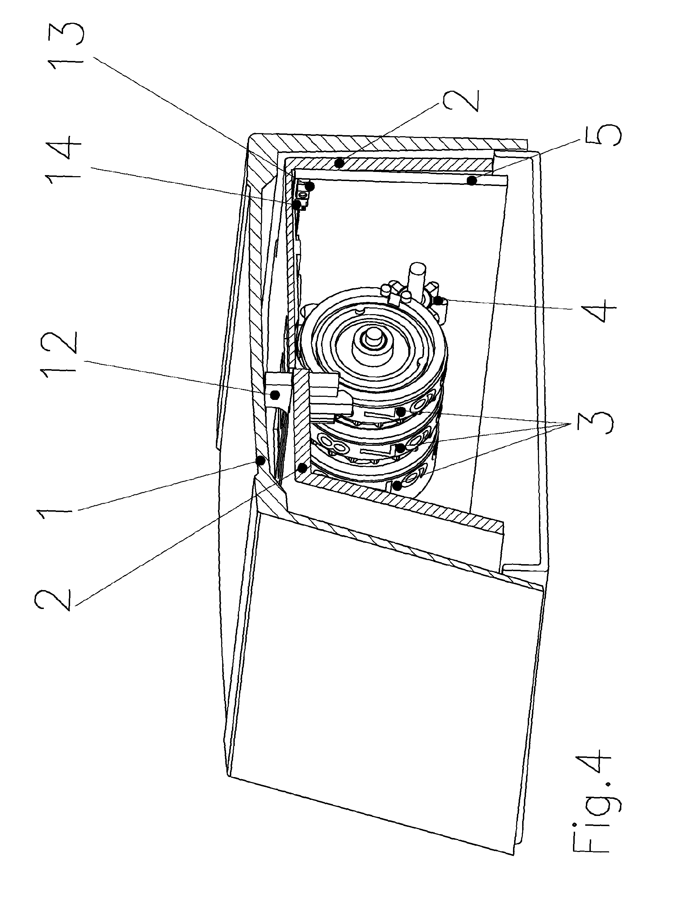

Fig. 3, Fig. 3a und Fig. 4 zeigen den Zähler gemäss Fig. 1 mit einer ersten Ausführungsvariante des Sensors zum Erfassen einer äusseren Krafteinwirkung bzw. zur Erfassung der Durchbiegung der Schutzhaube 1. Der Sensor besteht aus einem Lichtsender 14, einem Lichtempfänger 13, einem Reflektor 11 und einem Biegungstaster 12. Bei einer mittels der Kraft F herbeigeführten Durchbiegung der Schutzhaube 1 wird der Biegungstaster 12 vor den Reflektor 11 geschoben, wobei ein Federarm 12.1 nach unten gebogen wird. Lichtsender 14, Lichtempfänger 13 und Reflektor 11 bilden eine Reflektorlichtschranke, wobei bei einer Durchbiegung der Schutzhaube 1 der Lichtstrahl des Lichtsenders 14 mittels des Biegungstasters 12 unterbrochen wird. Der dabei sich verändernde Schaltzustand des Lichtempfängers 13 kann vom Mikroprozessor beispielsweise bei der Auslesung des Zählwerkstandes erfasst und zusammen mit dem Zählwerkstand an das Lieferwerk des Mediums übermittelt werden. Eine von der Auslesung des Zählwerkstandes unabhängige Erfassung und Übermittlung des Schaltzustandes der Reflektorlichtschranke ist auch denkbar.

Mit der Anordnung des Lichtsenders 14 und des Lichtempfängers 13 an der für die Ausleseelektronik des Zählwerkes Z und für den Mikroprozessor vorgesehenen Leiterplatte 5 ist ein kostengünstiger Sensor machbar.

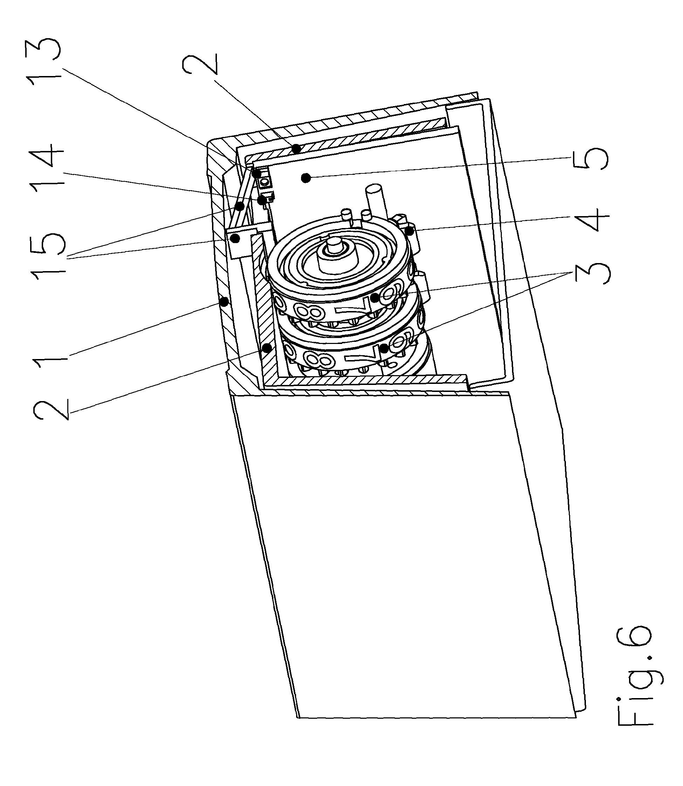

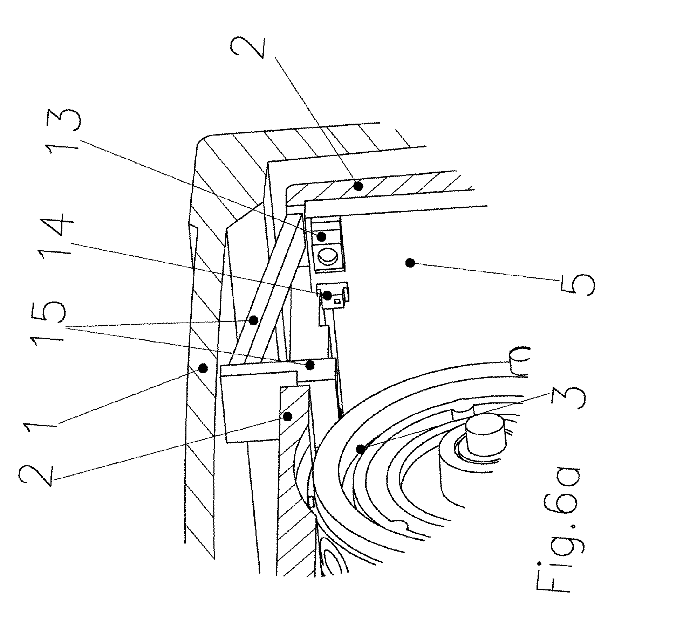

Fig. 5, Fig. 6 und Fig. 6a zeigen den Zähler gemäss Fig. 1 mit einer zweiten Ausführungsvariante des Sensors zum Erfassen einer äusseren Krafteinwirkung bzw. zur Erfassung der mittels der Kraft F herbeigeführten Durchbiegung der Schutzhaube 1. Der Sensor besteht aus dem Lichtsender 14, dem Lichtempfänger 13 und einem an einem Federarm 15 angeordneten Reflektor 16. Der Federarm 15 ist einenends leiterplattenseitig am Schild 2 angeordnet.

Bei einer Durchbiegung der Schutzhaube 1 wird der Federarm 15 am Reflektorende nach unten gebogen. Dadurch gelangt der Reflektor 16 ausserhalb der für die Reflexion des Lichtsender-Lichtstrahls notwendige Lage. Der dabei sich verändernde Schaltzustand des Lichtempfängers 13 kann vom Mikroprozessor beispielsweise bei der Auslesung des Zählwerkstandes erfasst und zusammen mit dem Zählwerkstand an das Lieferwerk des Mediums übermittelt werden. Eine von der Auslesung des Zählwerkstandes unabhängige Erfassung und Übermittlung des Schaltzustandes der Reflektorlichtschranke ist auch denkbar.

Die zweite Ausführungsvariante hat den Vorteil, dass der Lichtstrahl des Lichtsenders 14 kürzer ist, was zu einem stärkeren Lichtsignal am Lichtempfänger 13 führt. Andererseits ist die Durchbiegung der Schutzhaube 1 bei einer an einer beliebigen Stelle zwischen S1 und S2 aufgebrachten Kraft F in der Mitte zwischen S1 und S2 am grössten, weshalb eine Anordnung des Bewegungstasters 12, bzw. des Reflektors 16 möglichst in der Mitte zwischen S1 und S2 für eine sensitive Erfassung der Durchbiegung vorteilhaft ist.

## Patentansprüche

1. Zähler für ein strömendes Medium mit einem Zählwerk (Z) und einem Messwerk, wobei das das Zählwerk (Z) antreibende Messwerk vom strömenden Medium in Bewegung versetzbar ist,
**dadurch gekennzeichnet,**
**dass** ein Sensor zum Erfassen einer äusseren Krafteinwirkung (F) auf das Zählwerk (Z) vorgesehen ist.

2. Zähler nach Anspruch 1,
**dadurch gekennzeichnet,**
**dass** mit dem Sensor die Durchbiegung der Zählerschutzhaube (1) automatisch erfassbar ist.

3. Zähler nach einem der Ansprüche 1 oder 2,
**dadurch gekennzeichnet,**
**dass** der Sensor elektromechanische oder elektrische oder elektronische oder magnetische oder elektromagnetische oder elektrooptische Mittel aufweist.

4. Zähler nach Anspruch 3,
**dadurch gekennzeichnet,**
**dass** der Sensor eine Reflexionslichtschranke ist, bestehend aus einem Lichtsender (14), einem Lichtempfänger (13) und einem Reflektor (11).

5. Zähler nach Anspruch 4,
**dadurch gekennzeichnet,**
**dass** der Reflektor (11) mittels Bewegungstaster (12) abdeckbar ist, wobei die Lage des Bewegungstasters (12) in Abhängigkeit der äusseren Krafteinwirkung (F) veränderbar ist.

6. Zähler nach Anspruch 4,
**dadurch gekennzeichnet,**
**dass** der Reflektor (16) in Abhängigkeit der äusseren Krafteinwirkung (F) ausserhalb der für die Reflexion des Lichtsender-Lichtstrahls notwendige Lage bewegbar ist.

7. Zähler nach einem der vorhergehenden Ansprüche,
**dadurch gekennzeichnet,**
**dass** der Lichtsender (14) und der Lichtempfänger (13) an einer für die Ausleseelektronik des Zählwerkes (Z) und für einen Mikroprozessor vorgesehenen Leiterplatte (5) angeordnet sind.

8. Zähler nach einem der vorhergehenden Ansprüche,
**dadurch gekennzeichnet,**
**dass** der sich in Abhängigkeit der äusseren Krafteinwirkung (F) verändernde Schaltzustand des Lichtempfängers (13) mittels Mikroprozessor erfassbar ist und an das Lieferwerk des Mediums übermittelbar ist.

9. Zähler nach Anspruch 3,
**dadurch gekennzeichnet,**
**dass** als Sensor an der Innenseite der Schutzhaube (1) angeordnete Dehnmessstreifen vorgesehen sind, die bei einer Durchbiegung der Schutzhaube (1) ihren Widerstandswert verändern.

10. Zähler nach Anspruch 3,
**dadurch gekennzeichnet,**
**dass** der Sensor eine an der Innenseite der Schutzhaube (1) und eine an der Oberseite des Schildes (2) angeordnete, elektrisch leitende Beschichtung ist und die Beschichtungen einen elektrischen Schalter bilden, der geschlossen wird, sobald die Schutzhaube (1) das Schild (2) berührt.
